# EUROPÄISCHE PATENTSCHRIFT

(11) **EP 0 638 468 B1**
(45) Veröffentlichungstag und Bekanntmachung des Hinweises auf die Patenterteilung: **22.04.1998**
(21) Anmeldenummer: 94112518.9
(22) Anmeldetag: 10.08.1994
(51) Int. Cl.: B60R 22/46

(54) **Kupplung zum Übertragen der auf ein Zugseil wirkenden Rückstrafferbewegung auf eine Gurtbandspule eines Sicherheitsgurtaufrollautomaten**
Coupling for connecting the movement of the cable of a tensionner to the reel of a safety belt retractor
Accouplement pour transmettre le mouvement du câble de traction d'un tendeur à la bobine d'un enrouleur de ceinture de sécurité

(30) Priorität: 12.08.1993 DE 4327134
(43) Veröffentlichungstag der Anmeldung: 15.02.1995
(73) Patentinhaber: ICSRD Rückhaltesysteme für Fahrzeugsicherheit GmbH, 82234 Oberpfaffenhofen (DE)
(72) Erfinder: Specht, Martin, Dipl.-Ing. (FH), D-82340 Feldafing (DE)
(74) Vertreter: Maiwald, Walter, Dr. Dipl.-Chem.

(56) Entgegenhaltungen:
- EP-A- 0 313 098
- EP-A- 0 600 689
- DE-U- 8 600 002
- FR-A- 2 615 150
- GB-A- 2 216 776
- US-A- 4 925 212

## Beschreibung

Die Erfindung berifft eine Kupplung zum Übertragen der auf ein Zugseil wirkenden Rückstrafferbewegung auf eine Gurtbandspule eines Sicherheitsgurtaufrollautomaten mit einer Kupplungsscheibe, die mit dem Zugseil verbunden ist und einer Mitnahmeeinrichtung, welche bei bewegtem Zugseil die Kupplungsscheibe drehfest mit der Gurtbandspule verbindet, wobei eine von der Zugseilbewegung verursachte Drehung der Kupplungsscheibe auf die Spule übertragen wird.

Eine derartige Kupplung ist aus der EP 0 529 265 A1 bekannt. Durch die Rückstrafferbewegung wird eine Gurtlose im Gurtband, welches am Fahrzeuginsassen anliegt, bzw. locker aufgewickelte Gurtbandlagen auf der Gurtbandspule, welche zu einem Filmspuleneffekt führen können, beseitigt. Die Rückstrafferbewegung wird von einem herkömmlichen Gurtstraffer (z.B. EP 0 529 501 A1) erzeugt.

Aus der FR-A-2 615 150 ist eine Kupplung zum Übertragen der auf ein Zugseil wirkenden Rückstrafferbewegung auf eine Gurtbandspule eines Sicherheitsgurtaufrollautomaten bekannt, die eine Kupplungsscheibe, die mit dem Zugseil verbunden ist, und eine Mitnehmerscheibe aufweist, welche bei bewegtem Zugseil die Kupplungsscheibe drehfest mit der Gurtbandspule verbindet, wobei eine von der Zugseilbewegung verursachte Drehung der Kupplungsscheibe auf die Spule übertragen wird. Die Kupplungsscheibe ist im Normalbetrieb an einem mit dem Rahmen verbundenen Kupplungsgehäuse durch eine Verriegelungseinrichtung gegen eine Drehung verriegelt. Die Verriegelungseinrichtung ist durch die vom bewegten Zugseil ausgeübte Kraft lösbar. Die Mitnahmeeinrichtung weist ein Mitnahmeelement auf, welches nach dem Lösen der Verriegelungseinrichtung bei der Drehung der Kupplungsscheibe von einer radial innen liegenden Normalposition in eine radial äußerer Position in Eingriff mit der Gurtbandspule sich bewegt. In dieser Eingriffsposition sind die Kupplungsscheibe und die Spule drehfest für eine gemeinsame Drehung um eine Achse drehbar miteinander verbunden.

Bei der dargestellten Mitnahmeeinrichtung mit nur einem Mitnahmeelement ist jedoch ein störungsfreier Eingriff mit sicherer Antriebskraftübertragung nicht in ausreichendem Maße gewährleistet. Desweiteren ist von Nachteil, daß sich beim Auslösen der Gurtstraffung die Gurtbandspule drehen und eine Gurtbandbewegung zulassen kann.

Aufgabe der Erfindung ist es daher, eine derartige aus dem Stand der Technik bekannte Kupplung dahingehend zu verbessern, daß die Gurtbandstrafferbewegung auf die Gurtbandspule mit wirkungsvoller Übertragung der vom Zugseil ausgeübten Kräfte übertragen wird und daß das Bewegungsverhalten der Gurtbandspule optimiert ist.

Diese Aufgabe wird erfindungsgemäß durch eine Kupplung mit den Merkmalen des Patentanspruches 1 gelöst.

Bei der Erfindung werden die Kupplungsscheibe und die Mitnahmeeinrichtung zusammen mit der Gurtbandspule im Normalbetrieb in einer Normalposition, in welcher die Gurtbandspule sich frei drehen kann, gehalten. Im Normalbetrieb ist die Kupplungsscheibe am Rahmen des Aufrollautomaten oder an einem mit dem Rahmen verbundenen Kupplungsgehäuse gegen eine Drehung verriegelt. Wenn bei einer überhöhten Fahrzeuggeschwindigkeitsänderung die Antriebseinrichtung des Gurtstraffers ausgelöst wird, wird die zwischen der Kupplungsscheibe und dem Rahmen bzw. dem Kupplungsgehäuse wirksame Verriegelungseinrichtung durch die vom bewegten Zugseil ausgeübte Kraft gelöst. In bevorzugter Weise kann die Verriegelungseinrichtung als Verriegelungsstift ausgebildet sein, der durch die Zugseilbewegung abgeschert wird. Durch die radial nach außen bewegten Mitnehmerelemente wird ein verbessertes Drehmoment auf die Gurtbandspule von der durch das Zugseil gedrehten Kupplungsscheibe übertragen.

Nach Lösen der Verriegelung bzw. Abscheren des Verriegelungsstiftes kann die Bewegung des Zugseiles in eine Drehbewegung der Kupplungsscheibe umgesetzt werden. Gleichzeitig kommt ein Vorblockierungselement mit der Spule in Eingriff, so daß diese während der nachfolgenden Zugseilbewegung, welche zur Gurtstraffung dient, gegen Drehung blockiert wird. Das Vorblockierungselement kann als am Rahmen oder am Kupplungsgehause abgestützter Hebel ausgebildet sein.

Die Zugseilbewegung wird ausgenützt, um Mitnahmeelemente in eine radial außen liegende Eingriffsposition mit der Spule zu bringen, so daß die Kupplungsscheibe und die Spule drehfest miteinander verbunden sind. Hierzu können die Mitnahmeelemente, welche als Klemmbacken oder dergleichen ausgebildet sein können, verschiebbar an der Kupplungsscheibe gelagert sein. Die Mitnahmeelemente sind hierzu in gleichen Winkelabständen voneinander um eine gemeinsame Drehachse, um welche die Kupplungsscheibe, die Spule und die gesamte Mitnahmeeinrichtung drehbar ist, gelagert. Anstelle der mehreren Mitnahmeelemente kann auch ein Mitnahmeelement vorgesehen sein. Die Mitnahmeelemente können Steuerflächen aufweisen, die an Steuerelementen entlang geführt werden, welche während der Bewegung der Mitnahmeelemente in ihre Eingriffspositionen gegenüber dem Kupplungsgehäuse bzw. dem Rahmen des Gurtaufrollautomaten ortsfest gehalten werden.

Bevor die Kupplungsscheibe in Drehung versetzt wird, kann eine zweite Verriegelungseinrichtung, beispielsweise in Form eines weiteren Scherstiftes, die zwischen der Kupplungsscheibe und den Steuerelementen wirkt, gelöst werden, nachdem die erste Verriegelungseinrichtung gelöst ist. Die Steuerelemente, welche an einem gemeinsamen Steuerteil befestigt sein können, sind zu ihrer ortsfesten Positionierung mittels einer dritten Verriegelungseinrichtung am Kupplungsgehäuse bzw. am Rahmen festgehalten. Wenn die drehfeste Verbindung zwischen der Kupplungsscheibe und der Spule über die Mitnahmeeinrichtung drehfest verbunden ist, werden die Steuerelemente von ihrem Eingriff mit dem Mitnahmeelement bzw. den Mitnahmeelementen gelöst. Dies kann dadurch geschehen, daß eine dritte Verriegelungseinrichtung, mit welcher das Steuerteil, an welchem die Steuerelemente befestigt sind, am Kupplungsgehäuse oder Rahmen ortsfest verriegelt ist, gelöst wird. Auch diese Verriegelungseinrichtung kann als Scherstift ausgebildet sein, der durch die bei der Zugseilbewegung über die Kupplungsscheibe, die Mitnahmeeinrichtung und das Steuerteil übertragenen Kräfte abgeschert wird. Die Mitnahmeelemente können in ihrer endgültigen Eingriffsposition mit der Spule eine solche Position einnehmen, daß sie an den ortsfesten Steuerelementen, welche bevorzugt am Kupplungsgehäuse vorgesehen sind, vorbei bewegt werden.

Die Zugseilbewegung kann auch dahingehend ausgenutzt werden, daß eine flexible Ratsche oder ein ähnlicher akustischer Signalgeber mit einer drehfest mit der Spule verbundenen Zahnung in Eingriff gebracht werden kann. Auf diese Weise wird auch eine Fehlauslösung des Gurtstraffers angezeigt, so daß der Gurtstraffer durch einen neuen Gurtstraffer mit aufgeladenem Kraftspeicher ersetzt werden kann. Die Anwendung eines akustischen Signalgebers beispielsweise in Form einer flexiblen Ratsche der beschriebenen Art, kann jedoch auch bei solchen Kupplungen zur Anwendung kommen, bei denen die Zugseilbewegung auf Spulen mit fester Achsenlage im Rahmen übertragen wird.

Beim An- und Ablegen wird die Gurtbandspule bewegt und damit wird infolge des Zahneingriffs der Ratsche das akustische Signal erzeugt. Der Fahrzeuginsasse wird dann veranlaßt, eine Werkstatt zum Auswechseln des ausgelösten Gurtstraffers aufzusuchen. Bei einem Hubrollenautomaten können die Kupplungsscheibe und die Mitnahmeeinrichtung mit der Hubbewegung, mit welcher die Gurtbandspule in die Blockierstellung bewegt wird, mitbewegbar sein. Dies gilt sowohl für den Fall, daß die Gurtbandspule aufgrund einer überhöhten Fahrzeuggeschwindigkeitsänderung (Crash-Fall) in die Blockierstellung bewegt wird, als auch für den Fall, daß die Gurtbandspule vorsorglich in die Blockierstellung bewegt wird und von dort wieder in die Normalposition zurückkehrt. Die Verriegelungseinrichtung kann dann schwenkbar am Rahmen bzw. am Kupplungsgehäuse gelagert sein, so daß sie die Hubbewegung der Kupplungsscheibe und der Mitnahmeeinrichtung im Normalbetrieb ermöglicht.

Ein Hubrollenautomat, bei welchem die Erfindung zur Anwendung kommen kann, ist beipielsweise aus der DE-C-37 11 537 bekannt. Bei diesem Hubrollenautomaten ist die Hubrollenbewegung eine Rotationsbewegung, welche um eine außerhalb der Spule liegende Schwenkachse erfolgt. Der Schwenkpunkt bzw. die Schwenkachse für die Verriegelungseinrichtung liegt dann nahe zur Schwenkachse der Hubbewegung der Spule.

Der als Vorblockierungselement ausgebildete Hebel kann die Verriegelungseinrichtung, beispielsweise den Verriegelungsstift tragen. Der Hebeldrehpunkt bildet dann auch die Schwenkachse, um die die Verriegelung in ihrer Verriegelungsstellung schwenkbar gelagert ist.
Anhand der Figuren wird an einem Ausführungsbeispiel die Erfindung noch näher erläutert. Es zeigt:
- Fig. 1: in Explosionsdarstellung verschiedene Bestandteile der Kupplung, sowie eine Gurtbandspule und den Rahmen eines Hubrollenautomaten;
- Fig. 2-8: in Seitenansicht verschiedene Betriebsstellungen der in Fig. 1 dargestellten Kupplung;
- Fig. 9: einen akustischen Signalgeber zur Anzeige des ausgelösten Gurtstraffers;
- Fig.10: eine weitere Explosionsdarstellung verschiedener Bestandteile einer für einen Gurtaufrollautomaten mit feststehender Wickelwellenachse modifizierten Kupplung; und
- Fig.11: in Seitenansicht eine Kupplung für einen Gurtaufrollautomaten mit feststehender Wickelwellenachse.

Die in den Figuren dargestellte Kupplung besitzt eine Kupplungsscheibe 2. Die Kupplungsscheibe 2 ist drehbar um eine gemeinsame Achse 18 mit einer Gurtbandspule 1 eines Sicherheitsgurtaufrollautomaten, der als Hubrollenautomat ausgebildet ist, gelagert. Ein derartiger Hubrollenautomat ist aus der DE-C-37 11 537 bekannt. Bei diesem Gurtaufrollautomaten sind die Spule 1 und die Kupplungsscheibe 2 drehbar an einem Lagerschenkel 15 einer U-förmigen Lagernadel 26 gelagert. Diese Anordnung ist wiederum schwenkbar um eine von einem Lagerschenkel 17 gebildete Drehachse für eine Rotationsbewegung um diese Achse gelagert. In bekannter Weise kann die Spule hierbei zwischen einer Normalposition, in welcher die Spule frei drehbar ist und einer Blockierposition, in welcher Blockierzahnungen 23 und 24 an der Spule in entsprechende Blockierzahnungen 27 und 28 am Rahmen 8 eingreifen, bewegt werden. Durch endseitige Gehäusekappen 30 und 35 ist der Gurtaufrollautomat nach außen hin abgeschlossen. Mit 29 ist eine Endplatte bezeichnet.

Mit der Kupplungsscheibe 2 ist ein Zugseil 3 verbunden, welches die Gurtstrafferbewegung eines nicht näher dargestellten Gurtstraffers auf die Kupplungsscheibe 2 überträgt. Das Seil 3 ist hierzu auf einen entsprechend ausgebildeten Aufwickelteil der Kupplungsscheibe in bekannter Weise aufgewickelt. Beispielsweise kann das Zugseil 3 in der Weise auf die Kupplungsscheibe aufgewickelt sein, wie es aus der EP 0 529 265 A1 bekannt ist. Hierbei wird eine spiral-förmige Seilführung auf der Kupplungsscheibe verwendet. Hierdurch wird gewährleistet, daß die Gurtstrafferbewegung 3 in eine Rotationsbewegung der Kupplungsscheibe 2 umgewandelt wird.

Um diese Drehbewegung auf die Spule 1 zu übertragen, ist eine Mitnahmeeinrichtung vorgesehen, welche eine drehfeste Verbindung zwischen der Kupplungsscheibe 2 und der Spule 1 herstellen kann. Diese Mitnahmeeinrichtung besitzt an der Kupplungsscheibe 2 verschiebbar gelagerte, als Greiferbacken ausgebildete Mitnahmeelemente 4. Die Mitnahmeelemente 4 sind an Lagerbacken 7 der Kupplungsscheibe 2 verschiebbar gelagert. Die Mitnahmelemente 4 besitzen nach außen gerichtete Zahnungen 19, welche mit der Innenseite eines drehfest mit der Spule 1 verbundenen Mitnahmerings 20 in kraftschlüssigen Eingriff kommen können. Dieser Kraftschluß kann durch Form- oder Reibschluß hergestellt werden.

Ferner ist zur Steuerung der Bewegung der Mitnahmeelemente ein Steuerteil 5 vorgesehen, an dessen Umfang verteilt Steuerelemente 6 vorgesehen sind. In gleicher Weise wie die Mitnahmeelemente 4 sind die Steuerelemente 6 in gleichen Winkelabständen voneinander um die gemeinsame Achse 18 bzw. den Lagerschenkel 15 angeordnet. Beim dargestellten Ausführungsbeispiel sind drei Mitnahmeelemente 4 und drei zugeordnete Steuerelemente 6 in Form von Steuerstiften vorgesehen. An den Mitnahmeelementen 4 sind Steuerflächen 11 vorgesehen. Für eine gesteuerte Eingriffsbewegung der Mitnahmeelemente 4 werden die Steuerflächen 11 an den Steuerstiften entlang geführt. Durch eine Positionierplatte 34 werden die Mitnahmeelemente 4 in ihrer Normalposition z.B. durch Reibkraft zwischen der Positionierplatte 34 und der Kupplungsscheibe 2 gehalten.

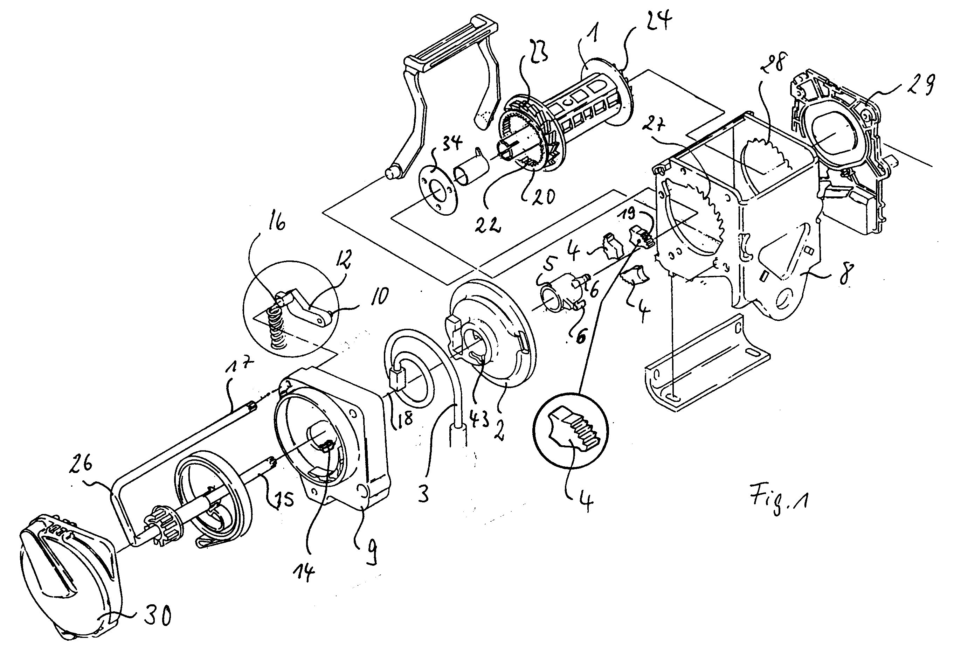

In der in der Fig. 2 dargestellten Normalposition für einen normalen Betrieb des Aufrollautomaten sind drei Verriegelungseinrichtungen, für welche beim dargestellten Ausführungsbeispiel drei abscherbare Stifte verwendet werden, im Einsatz. Die erste Verriegelungseinrichtung 10 wird gebildet von einem an einem Hebel 12 vorgesehenen Stift. Dieser Stift verriegelt die Kupplungsscheibe 2 am Rahmen 8 bzw. an einem Kupplungsgehäuse 9, welches wie die Fig. 1 zeigt, zwischen der stirnseitigen Abdeckung 30 und dem Rahmen 8 vorgesehen ist. Das Kupplungsgehäuse 9 ist starr mit dem Rahmen 8 verbunden. Der Hebel 12 ist um eine Schwenkachse 16 schwenkbar am Rahmen 8 bzw. Kupplungsgehäuse 9 gelagert. In dieser Normalposition kann aufgrund der schwenkbaren Führung der Verriegelungseinrichtung 10 (Verriegelungsstift) um die Schwenkachse 16 die Kupplungsscheibe 2 zusammen mit der Spule 1 Schwenkbewegungen zwischen der in Fig. 2 dargestellten Normalposition und einer Blockierposition mitausführen.

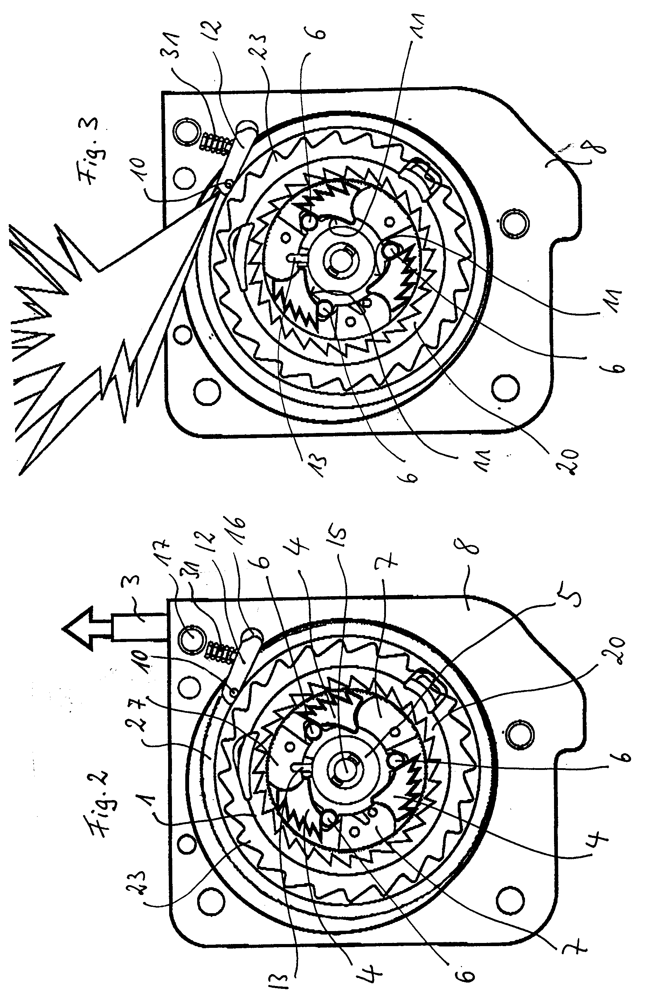

Wenn das Kraftfahrzeug, in welchem der dargestellte Aufrollautomat eingebaut ist, einer überhöhten Geschwindigkeitsänderung, z.B. in einer Crash-Situation, unterliegt, wird die Antriebseinrichtung des Gurtstraffers ausgelöst und das Zugseil 3 führt eine in der Fig. 2 dargestellte Strafferbewegung durch. Die Bewegung des Zugseiles 3 in der in der Fig. 2 dargestellten Pfeilrichtung wirkt sich auf die Kupplungsscheibe 2 aus und versetzt diese in Drehung. Dabei wird, wie in Fig. 3 gezeigt ist, die als Stift ausgebildete Verriegelung 10 abgeschert und der unter der vorspannung einer Feder 31 stehende Hebel, welcher ein Vorblockierungselement 12 bildet, wird, wie es in Fig. 4 dargestellt ist, in eine Eingriffsposition gebracht, in welcher er in die Hauptblockierzahnung 23 der Spule 1 eingreift. Durch diese Vorblokkierung wird die Spule an einer Drehung entgegengesetzt zur Zugseilauszugsrichtung gehindert. Durch die Weiterdrehung der Kupplungsscheibe 2 wird eine zweite Verriegelungseinrichtung 13 in Form eines Scherstiftes, der in der Normalposition (Fig. 2) zwischen einem Steuerteil 5 und der Kupplungsscheibe 2, beispielsweise an einem an der Kupplungsscheibe 2 befestigten Lagerbacken 7 wirkt, abgeschert. Das Steuerteil 5 mit den daran befestigten Steuerelementen 6 wird durch eine dritte Verriegelungseinrichtung 14 gegenüber dem Rahmen 8 bzw. dem Kupplungsgehäuse 9 verriegelt. Das Steuerteil 5 stützt sich dabei über einen Steuerhebel 32 (Fig. 4) am als Verriegelung 14 wirkenden Stift, der durch eine die Hubbewegung erlaubende Ausnehmung 43 in der Kupplungsscheibe 2 ragt, ab.

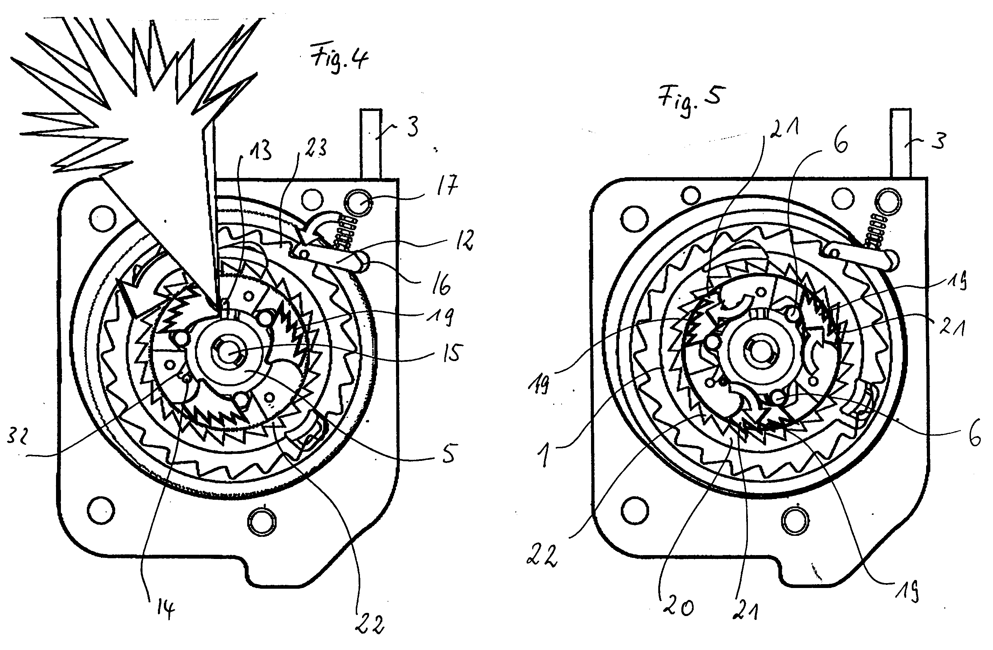

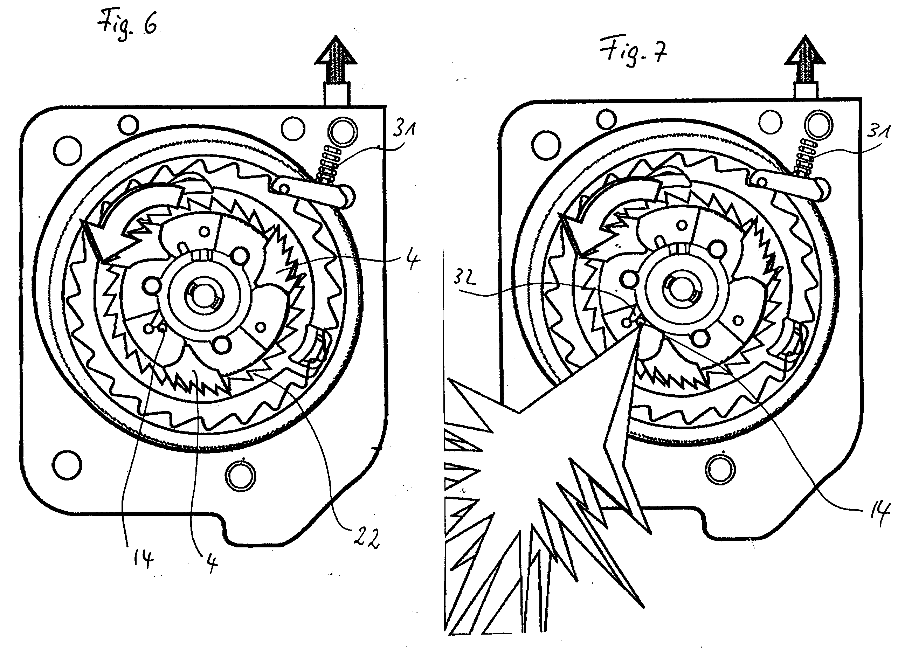

Die Weiterbewegung des Zugseiles 3 überträgt sich von der Kupplungsscheibe 2 und den daran befindlichen Lagerbacken auf die Mitnahmeelemente 4. Die durch die Verriegelung 14 ortsfest gehaltenen Steuerelemente kommen dabei in den Bereich der Steuerflächen 11 (in Fig. 3 bezeichnet) zu liegen, wie es in Fig. 5 dargestellt ist. Die Steuerflächen 11 werden bei der Weiterdrehung an den ortsfest gehaltenen Steuerelementen 6 vorbei geführt, und dabei in Richtung der in Fig. 5 dargestellten Pfeile radial nach außen bewegt. Bei dieser Bewegung kommen beim dargestellten Ausführungsbeispiel jeweils erste Zähne der Zahnung 19, welche als Fangzähne 21 ausgebildet ist, mit einer an der Innenseite des Mitnahmerings 20 vorgesehenen Zahnung 22 in Eingriff. Wenn die Fangzähne 21 mit der Innenzahnung 22 in Eingriff sind, wird bei der Weiterdrehung der Kupplungsscheibe 2 aufgrund des vom Zugseil 3 kommenden Zuges und der anschiebenden Wirkung, welche die Lagerbacken 7 auf die Mitnahmeelemente 4 ausüben, der gesamte Bereich der jeweiligen Zahnungen 19 in Eingriff gebracht mit der Innenseite des Mitnahmerings 20 bzw. der dort vorgesehenen Zahnung. Dieser Zustand ist in der Fig. 6 dargestellt.

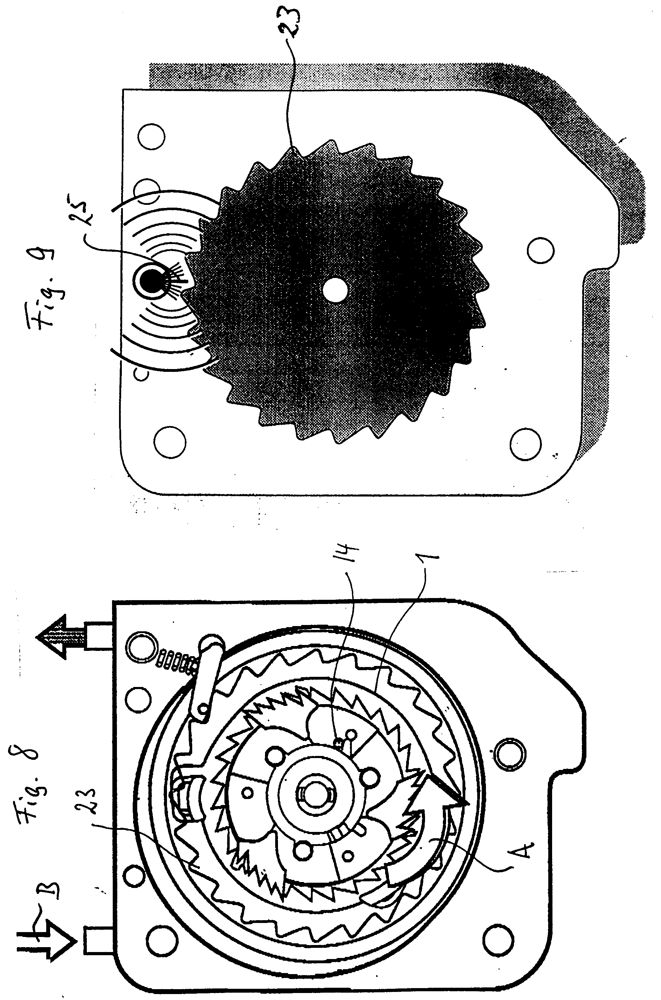

Durch den im Kupplungsgehäuse 9 oder im Rahmen 8 genau positionierten Stift, welcher die dritte Verriegelungseinrichtung 14 bildet, wird eine genaue Positionierung des Steuerteils 5 und der daran befestigten Steuerelemente 6 gewährleistet. Hierdurch wird ferner erreicht, daß die mit ihren Steuerflächen 11 entlang der Steuerelemente 6 geführten Mitnahmeelemente 4 in Eingriff mit der Innenzahnung des Mitnahmerings 20 kommen. Insbesondere wird hierbei ein erster Eingriff des Fangzahnes 21 in einen der Zähne an der Innenseite des Mitnahmerings 20 gewährleistet. Die Steuerung des Eingriffs der übrigen Zähne in den jeweiligen Zahnungen 19 in die Innenzahnung 22 des Mitnahmerings 20 erfolgt dann selbsttätig bei der Weiterdrehung der Kupplungsscheibe 2, wobei dann die Steuerflächen 11 von den Steuerelementen 6 entfernt werden. Hierdurch ist die drehfeste Verbindung zwischen der Kupplungsscheibe 2 und der Spule 1 hergestellt (Fig. 6). Bei der Weiterdrehung aufgrund des vom Zugseil 3 vermittelten Zuges kann durch die Drehung des Steuerteils 5 der Verriegelungsstift 14 durch den Steuerhebel 32 abgeschert werden, wie dies in der Fig. 7 dargestellt ist. Die Kupplungsscheibe 2 und das Steuerteil 5 können sich frei drehen und werden durch die vom Zugseil vermittelte Gurtstrafferbewegung in Richtung eines Pfeiles A in der Fig. 8 gedreht, so daß das Gurtband entgegen der Gurtbandauszugsrichtung von der mitgedrehten Spule 1 in den Automaten in Richtung eines Pfeiles B in der Fig. 8 eingezogen wird. Dabei werden auch locker auf der Spule aufliegende Gurtbandlagen zur Vermeidung eines Filmspuleffektes festgezogen. Dieser Vorgang erfolgt, bevor die Spule 1 aus ihrer Normalposition in die Blockierposition geschwenkt wird, in welcher die Blockierverzahnungen 23 und 24 der Spule mit den rahmenseitigen Verzahnungen 27 und 28 in Blockiereingriff kommen.

Der Mitnahmering 20 kann in der Weise ausgebildet sein, daß er ein innenliegendes Ringteil aufweist, das aus einem weicheren Material besteht als das Material der Mitnahmeelemente 4. Hierdurch wird gewährleistet, daß die Mitnahmeelemente 4 mit ihren jeweiligen Zahnungen 19 sich in das weiche Material eingraben und so einen einwandfreien Kraftschluß zwischen der Kupplungsscheibe 2 und der Spule 1 herstellen. In bevorzugter Weise wird das innen liegende Ringteil von einem harten, beispielsweise aus Stahl bestehenden, äußeren Ringteil am Mitnahmering 20 umfaßt, so daß ein Gegenlager für die Mitnahmekraft gebildet wird.

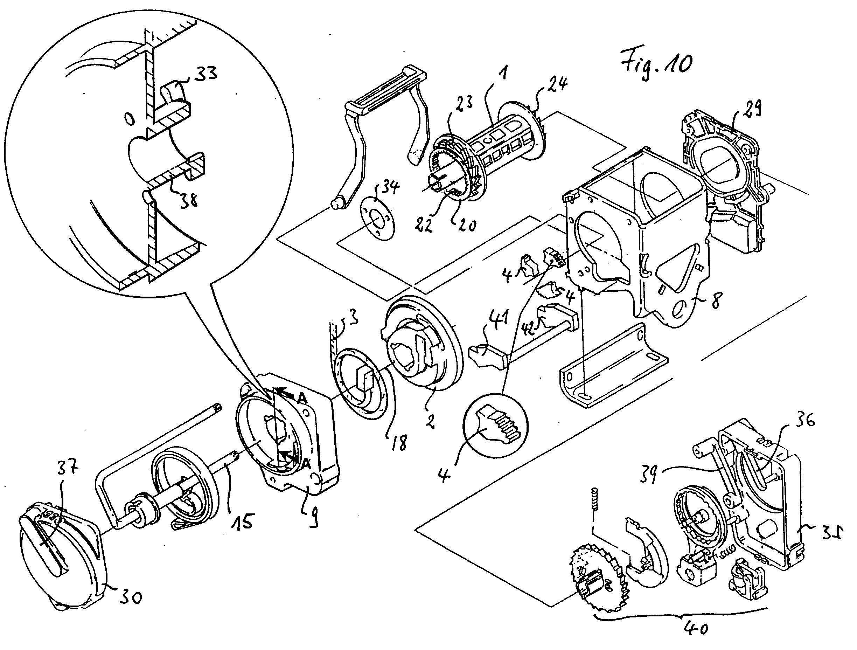

In der Fig. 9 ist eine flexible Ratsche dargestellt, welche durch das in einer Gurtstrafferbewegung bewegte Zugseil 3 in eine in der Fig. 9 dargestellte Eingriffsposition mit einer Zahnung gebracht ist, die drehfest mit der Spule 1 verbunden ist. Beim dargestellten Ausführungsbeispiel ist dies beispielsweise die Hauptblockierverzahnung 23 an der Spule 1. Hierdurch wird ein akustischer Signalgeber erreicht, welcher anzeigt, daß der Gurtstraffer ausgelöst worden ist. Insbesondere dann, wenn der Gurtstraffer durch eine Erschütterung oder sonst wie ausgelöst wurde, ohne das es zu einer unfallbedingten Blockierung des Gurtbandaufrollautomaten gekommen ist, wird dem Fahrzeuginsassen beim Betätigen, insbesondere beim Anlegen und wieder Ablegen des Sicherheitsgurtes, durch das akustische Signal der ausgelöste Zustand des Gurtstraffers angezeigt, so daß er zu einer Werkstattfahrt veranlaßt wird.

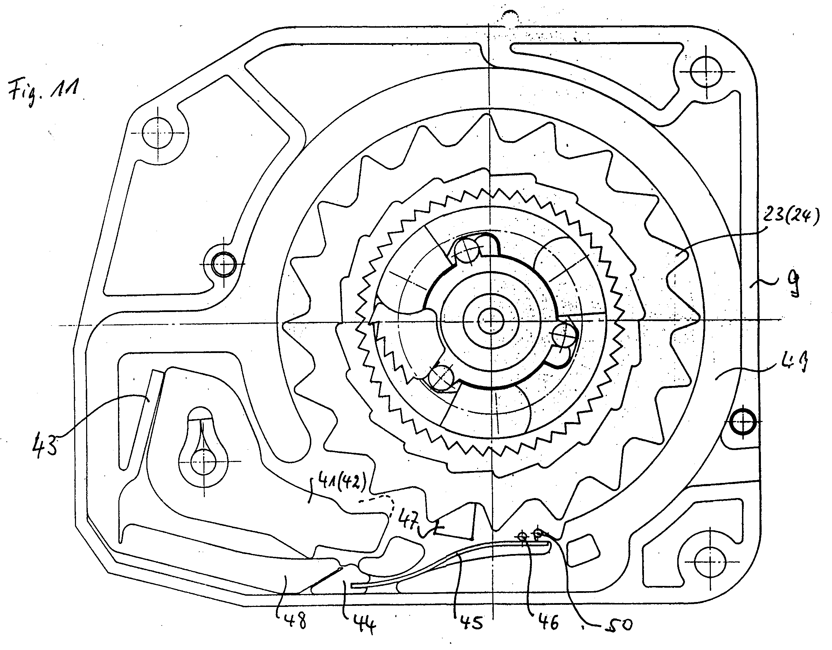

In der Figur 10 sind in perspektivischer Explosionsdarstellung modifizierte Kupplungsteile für einen Gurtaufrollautomaten mit feststehender Wickelwellenachse 18 gezeigt. Die Wickelwellenachse bzw. gemeinsame Achse für die Kupplungsscheibe 2 und die Gurtbandspule 1 wird gebildet durch den Lagerschenkel 15 der U-förmigen Lagernadel. Diese U-förmige Lagernadel ist jedoch durch Ausnehmungen 36 und 37 in den endseitigen Gehäusekappen 30 und 35 an einer Schwenkbewegung gehindert, so daß der Lagerschenkel 15 eine feststehende Achse für die Gurtbandspule 1 und die Kupplungsscheibe 2 bildet.

Bei dieser Ausführungsform sind Steuerelemente 33 vorgesehen, welche ortsfest am Kupplungsgehäuse 9 an einer axial sich erstreckenden Hülse 38 vorgesehen sind. Diese Steuerelemente 33 kommen mit den Steuerflächen 11 an den Mitnahmeelementen 4 in Eingriff, wenn diese nach außen in die Eingriffsposition mit dem Mitnahmering 20 gebracht werden.

Um die Wickelwellenachse festzulegen, ist ein weiterer Fixierungssteg 39 vorgesehen, welcher mit den beiden Enden der U-förmigen Lagernadel in Eingriff kommt und in der schon erwähnten Ausnehmung 36 der Gehäusekappe 35 fixiert ist.

Eine in bekannter Weise (DE 37 11 537 C2) ausgebildete gurtbandsensitive und fahrzeugsensitive Sensoreinrichtung 40 wirkt auf am Rahmen 8 abgestützte Verriegelungsklinken 41, 42, welche mit den Blockierzahnungen 23 und 24 an der Spule 1 in Eingriff kommen können. Dieser Eingriff erfolgt dann, wenn durch das Zugseil 3 lose Gurtbandlagen - wie schon erläutert - beseitigt sind.

Bei dem in der Fig. 11 dargestellten Ausführungsbeispiel erfolgt die Betätigung der Sperrklinken unabhängig von der Sensoreinrichtung. Bei dieser Ausführungsform, welche wie die Ausführungsform der Fig. 10 eine feste Gurtspulenachse aufweist, wird die Sperrklinke 41, 42 durch ein federndes Halteteil 43 in Ruheposition gehalten. In dieser Ruheposition ist die Sperrklinke außer Eingriff mit der Blockierverzahnung bzw. mit den Blockierverzahnungen 23, 24 der Gurtspule 1. Zur Betätigung der Klinke 41, 42 dient ein Betätigungsteil 44. Dieses Betätigungsteil 44 steht unter der Vorspannung einer Feder 45. Die Feder 45 und das Betätigungsteil 44 sind in der Darstellung der Fig. 11 ebenfalls in Ruheposition gehalten. Dies wird erreicht durch einen Haltestift 46. Der Haltestift 46 ist als Scherstift ausgebildet und kann durch ein beim Strammen des Sicherheitsgurtes bewegtes Bauteil 47 abgeschert werden. Das Bauteil 47 kann an die Kupplungsscheibe 2 angeformt sein und wirkt als Abscherelement für den Haltestift 46. Das Betätigungsteil 44 kann über einen Zwischenhebel 48 auf die Sperrklinke 41, 42 wirken.

Wenn beim Strammantrieb die Kupplungsscheibe 2 gedreht wird, wird das Bauteil 47 in der Fig. 11 entgegen dem Uhrzeigersinn mitgedreht und der Haltestift 46 abgeschert. Die Vorspannung der Feder 45 wirkt dann auf das Betätigungsteil 44, so daß über den Zwischenhebel 48 die Sperrklinke 41, 42 entgegend der Kraft des Halteteils 43 in die Blockierverzahnung 23, 24 der Gurtspule 1 verschwenkt wird (strichlierte Position).

Für die Feder 45, den Zwischenhebel 48 und das Halteteil 43 ist zur Positionierung ein gemeinsamer Haltering 49, beispielsweise aus Kunststoff, vorgesehen. Dieser Haltering 49 ist in das Gehäuse 9 eingesetzt. Mit Hilfe eines Befestigungsstiftes 50 kann der Haltering 49 am Gehäuse 9 befestigt sein. Auch der Haltestift 46 kann am Gehäuse 9 zum Halten der Feder 45 und des Betätigungsteiles 44 in ihrer Ruheposition fixiert sein.

Wenn nach dem Abscheren des Abscherstiftes 46 durch die Abscherkante am Bauteil 47 die Klinken 41, 42 in die Blockierverzahnungen 23, 24 durch die Vorspannung der Feder 45 gedrückt werden, ratschen die Klinken auf den Verzahnungen 23, 24 beim Drehen der Gurtspule 1 während der weiteren Strammbewegung. Wenn die Strammbewegung beendet ist, kommen bei Umkehrung dieser Drehbewegung die Klinken 41, 42 in ihre entgültige Sperrstellung mit den Verzahnungen 23, 24 an bei den Seiten der Gurtspule 1.

## Patentansprüche

1. Kupplung zum Übertragen der auf ein Zugseil (3) wirkenden Rückstrafferbewegung auf eine Gurtbandspule (1) eines Sicherheitsgurtaufrollautomaten, mit einer Kupplungsscheibe (2), die mit dem Zugseil (3) verbunden ist und einer Mitnahmeeinrichtung (4, 7), welche bei bewegtem Zugseil (3) die Kupplungsscheibe (2) drehfest mit der Gurtbandspule (1) verbindet, wobei eine von der Zugseilbewegung verursachte Drehung der Kupplungsscheibe (2) auf die Spule (1) übertragen wird, wobei die Kupplungsscheibe (2) im Normalbetrieb am Rahmen (8) des Aufrollautomaten bzw. an einem mit dem Rahmen (8) verbundenen Kupplungsgehäuse (9) durch eine Verriegelungseinrichtung (10) gegen eine Drehung verriegelt ist, die Verriegelungseinrichtung (10) durch die vom bewegten Zugseil ausgeübte Kraft lösbar ist, die Mitnahmeeinrichtung (4, 7) Mitnahmeelemente (4) aufweist, welche nach dem Lösen der Verriegelungseinrichtung (10) bei der Drehung der Kupplungsscheibe (2) von einer radial innen liegenden Normalposition in eine radiale äußere Position in Eingriff mit der Gurtbandspule (1) sich bewegen, und wobei in dieser Eingriffsposition die Kupplungsscheibe (2) und die Spule (1) drehfest für eine gemeinsame Drehung um eine Achse (18) drehbar miteinander verbunden sind, und wobei nach dem Lösen der Verriegelung (10) ein am Rahmen (8) bzw. Kupplungsgehäuse (9) abgestütztes Vorblockierungselement (12) mit der Spule (1) in Eingriff kommt und die Spule (1) während der nachfolgenden Zugseilbewegung gegen Drehung blockiert.

2. Kupplung nach Anspruch 1, dadurch gekennzeichnet, daß die Drehung entgegengesetzt zur Zugseilauszugsrichtung blockiert ist.

3. Kupplung nach Anspruch 1 oder 2, dadurch gekennzeichnet, daß das Vorblockierungselement (12) als am Rahmen (8) bzw. dem Kupplungsgehäuse (9) abgestützter Hebel ausgebildet ist.

4. Kupplung nach einem der Ansprüche 1 bis 3, dadurch gekennzeichnet, daß die Vorverriegelungseinrichtung (10) am Vorblockierungselement (12) befestigt ist.

5. Kupplung nach einem der Ansprüche 1 bis 4, dadurch gekennzeichnet, daß die Mitnahmeelemente (4) verschiebbar an der Kupplungsscheibe (2) gelagert sind.

6. Kupplung nach einem der Ansprüche 1 bis 5, dadurch gekennzeichnet, daß die Mitnahmeelemente (4) Steuerflächen (11) aufweisen, die an Steuerelementen (6, 33) entlang führbar sind, welche während der Bewegung der Mitnahmeelemente (4) in die Eingriffsposition gegenüber dem Rahmen (8) bzw. Kupplungsgehäuse (9) ortsfest gehalten werden.

7. Kupplung nach einem der Ansprüche 1 bis 6, dadurch gekennzeichnet, daß im Normalbetrieb die Kupplungsscheibe (2) mit den Steuerelementen (6) über eine zweite Verriegelungseinrichtung (13) drehfest verbunden ist und daß nach dem Lösen der zweiten Verriegelungseinrichtung (13) die Kupplungsscheibe (2) durch die Zugseilbewegung gegenüber den am Rahmen (8) bzw. Kupplungsgehäuse (9) noch festgehaltenen Steuerelementen (6) drehbar ist.

8. Kupplung nach einem der Ansprüche 1 bis 7, dadurch gekennzeichnet, daß die Steuerelemente (6) am Rahmen (8) bzw. Kupplungsgehäuse (9) solange mittels einer dritten Verriegelungseinrichtung (14) festgehalten sind, bis die drehfeste Verbindung zwischen der Kupplungsscheibe (2) und der Spule (1) über die Mitnahmeelemente (4) hergestellt ist.

9. Kupplung nach Anspruch 8, dadurch gekennzeichnet, daß die dritte Verriegelungseinrichtung (14) dann gelöst ist, wenn die drehfeste Verbindung zwischen der Spule (1) und der Kupplungsscheibe (2) hergestellt ist.

10. Kupplung nach einem der Ansprüche 1 bis 9, dadurch gekennzeichnet, daß die drei Verriegelungseinrichtungen (10, 13, 14) als Stifte ausgebildet sind, die durch von der Zugseilbewegung ausgeübte Kräfte abgeschert werden.

11. Kupplung nach einem der Ansprüche 1 bis 8, dadurch gekennzeichnet, daß die Steuerelemente (33) am Kupplungsgehäuse (9) vorgesehen sind.

12. Kupplung nach einem der Ansprüche 1 bis 11, dadurch gekennzeichnet, daß die Mitnahmeelemente (4) als an der Kupplungsscheibe (2) verschiebbare Backen ausgebildet sind, die mit dem Innenumfang eines an der Spule (1) vorgesehenen Mitnahmerings (20) in drehfesten Eingriff bringbar sind.

13. Kupplung nach Anspruch 12, dadurch gekennzeichnet, daß die Mitnahmeelemente (4) eine mit dem Innenumfang des Mitnahmerings (20) in Eingriff bringbare Zahnung (19) aufweisen.

14. Kupplung nach Anspruch 12 oder 13, dadurch gekennzeichnet, daß ein als Fangzahn (21) ausgebildeter Zahn in der Zahnung (19) bei der Verschiebung des jeweiligen Mitnahmeelements (4) mit dem Innenumfang des Mitnahmerings (20) in Eingriff bringbar ist.

15. Kupplung nach einem der Ansprüche 12 bis 14, dadurch gekennzeichnet, daß der Mitnahmering (20) an seinem Innenumfang eine Zahnung (22) aufweist.

16. Kupplung nach einem der Ansprüche 1 bis 15, dadurch gekennzeichnet, daß die Mitnahmeelemente (4) aus einem härteren Material bestehen als der innen liegende Ringteil des Mitnahmerings (20), mit welchem die Mitnahmeelemente (4) in Eingriff kommen.

17. Kupplung nach Anspruch 16, dadurch gekennzeichnet, daß der innen liegende Ringteil des Mitnahmerings (20) von einem härteren äußeren Ringteil umfaßt ist.

18. Kupplung nach einem der Ansprüche 1 bis 17, dadurch gekennzeichnet, daß die Mitnahmeelemente (4) durch eine Positionierplatte (34) in Ruheposition gehalten sind.

19. Kupplung nach einem der Ansprüche 1 bis 18, dadurch gekennzeichnet, daß durch die Zugseilbewegung eine flexible Ratsche (25) mit einer mit der Spule (1) drehfest verbundenen Zahnung (23) bzw. (24) in Eingriff bringbar ist.

20. Kupplung nach einem der Ansprüche 1 bis 19, dadurch gekennzeichnet, daß die Kupplungsscheibe (2) und die Mitnahmeeinrichtung (47) zusammen mit der Gurtbandspule (1) durch eine Hubbewegung in einer Blockierstellung mitbewegbar sind und daß im Normalbetrieb die Verriegelungseinrichtung (10) am Rahmen (8) des Aufrollautomaten bzw. an einem mit dem Rahmen (8) verbundenen Kupplungsgehäuse (9) gelagert ist.

21. Kupplung nach Anspruch 20, dadurch gekennzeichnet, daß die Schwenkachse (16) in der Nähe einer Drehachse (17) liegt, um welche die als Rotationsbewegung ausgebildete Hubbewegung der Spule (1) erfolgt.

22. Kupplung nach einem der Ansprüche 1 bis 21, dadurch gekennzeichnet, daß eine Sperrklinke (41, 42) zum Sperren einer Gurtspule eines Sicherheitsgurtaufrollers gegen Bandauszug durch ein beim Strammen des Sicherheitsgurtes bewegtes Bauteil (47) für den sperrenden Eingriff in die Gurtspule (1) aktivierbar ist.

23. Kupplung nach Anspruch 22, dadurch gekennzeichnet, daß ein Betätigungsteil (44), welches die Sperrklinke (41,42) in eine Eingriffsposition mit der Gurtspule (1) bewegt, beim Strammen des Sicherheitsgurtes aus einer Ruheposition bewegbar ist.

24. Kupplung nach Anspruch 23, dadurch gekennzeichnet, daß das Betätigungsteil (44) in Betätigungsrichtung vorgespannt ist.

25. Kupplung nach einem der Ansprüche 22 bis 24, dadurch gekennzeichnet, daß ein Halteteil (46) vorgesehen ist, das die Sperrklinke (41, 42) in einer deaktivierten Position mit Vorspannung hält, welche durch das Betätigungsteil (44) überwunden wird.

26. Kupplung nach einem der Ansprüche 22 bis 25, dadurch gekennzeichnet, daß die Sperrklinke (41, 42) durch Umkehrung einer durch den Strafferantrieb verursachten Bewegung in ihre entgültige Sperrstellung kommt.

## Claims

1. Coupling for the purpose of transmitting the retensioning movement, which acts upon a traction cable (3), to a belt band spool (1) of an automatic seat belt take-up device, having a coupling disc (2) which is connected to the traction cable (3) and a driving device (4, 7) which in the event of movement occurring in the traction cable (3) connects the coupling disc (2) in a non-rotatable manner to the belt band spool (1) , wherein a rotational movement of the coupling disc (2) caused by the movement in the traction cable is transmitted to the spool (1), wherein the coupling disc (2) in the normal operation is locked by virtue of a locking device (10) to prevent rotation on the frame (8) of the automatic take-up device or on a coupling casing (9) connected to the frame (8), the locking device (10) can be released by virtue of the force exerted by the moving traction cable, the driving device (4, 7) comprises driving elements (4) which after release of the locking device (10) move upon rotation of the coupling disc (2) from a radially inner-lying normal position into a radial outer position in engagement with the belt band spool (1) and wherein in this engaged position the coupling disc (2) and the spool (1) are mutually connected in a non-rotatable manner for a common rotation about an axis (18), and wherein after the release of the locking device (10) a preliminary locking element (12) supported on the frame (8) or the coupling casing (9) engages the spool (1) and locks the spool (1) during the subsequent movement of the traction cable to prevent rotation.

2. Coupling according to claim 1, characterised in that the rotational movement in the opposite direction to the direction in which the traction cable is drawn out is blocked.

3. Coupling according to claim 1 or 2, characterised in that the preliminary locking element (12) is formed as a lever supported on the frame (8) or the coupling casing (9).

4. Coupling according to any one of the claims 1 to 3, characterised in that the preliminary locking device (10) is attached to the preliminary locking element (12).

5. Coupling according to any one of claims 1 to 4, characterised in that the driving elements (4) are mounted in a displaceable manner on the coupling disc (2).

6. Coupling according to any one of claims 1 to 5, characterised in that the driving elements (4) comprise control surfaces (11), which can be guided along control elements (6, 33) which are fixedly held with respect to the frame (8) or coupling casing (9) during the movement of the driving elements (4) into the engagement position.

7. Coupling according to any one of claims 1 to 6, characterised in that in the normal operation the coupling disc (2) is non-rotatably connected to the control elements (6) by way of a second locking device (13) and that after the release of the second locking device (13) the coupling disc (2) can rotate by virtue of the traction cable movement with respect to the control elements (6) still fixedly held on the frame (8) or coupling casing (9).

8. Coupling according to any one of claims 1 to 7, characterised in that the control elements (6) are fixedly held on the frame (8) or coupling casing (9) by means of a third locking device (14) until the non-rotatable connection between the coupling disc (2) and the spool (1) is produced by way of the driving elements (4).

9. Coupling according to claim 8 characterised in that the third locking device (14) is then released if the non-rotatable connection between the spool (1) and the coupling disc (2) is produced.

10. Coupling according to any one of claims 1 to 9, characterised in that the three locking devices (10, 13, 14) are formed as pins which are sheared by virtue of the forces exerted by the traction cable movement.

11. Coupling according to any one of claims 1 to 8, characterised in that the control elements (33) are provided on the coupling casing (9).

12. Coupling according to any one of claims 1 to 11, characterised in that the driving elements (4) are formed as jaws which are displaceable on the coupling disc (2) and which can be brought into non-rotatable engagement with the inner periphery of a driving ring (2) provided on the coil (1).

13. Coupling according to claim 12, characterised in that the driving elements (4) comprise a toothing arrangement (19) which can be brought into engagement with the inner periphery of the driving ring (20).

14. Coupling according to claim 12 or 13, characterised in that one tooth which is formed as a gripping tooth (21) in the toothing arrangement (19) can be moved into engagement with the inner periphery of the driving ring (20) upon the displacement of the respective driving elements (4).

15. Coupling according to any one of claims 12 to 14 characterised in that the driving ring (20) comprises a toothing arrangement (22) on its inner periphery.

16. Coupling according to any one of claims 1 to 15, characterised in that the driving elements (4) consist of a harder material than the inner-lying annular part of the driving ring (20), with which the driving elements (4) come into engagement.

17. Coupling according to claim 16, characterised in that the inner-lying annular part of the driving ring (20) is encompassed by a harder outer annular part.

18. Coupling according to any one of claims 1 to 17, characterised in that the driving elements (4) are held in an inoperative position by virtue of a positioning plate (34).

19. Coupling according to any one of claims 1 to 18, characterised in that by virtue of the traction cable movement a flexible ratchet (25) can be brought into engagement with a toothing arrangement (23) or (24) which is non-rotatably connected to the spool (1).

20. Coupling according to any one of claims 1 to 19, characterised in that the coupling disc (2) and the driving device (47) can be moved as one with the belt band spool (1) by virtue of a lifting movement in a locking position and that in the normal operation the locking device (10) is mounted on the frame (8) of the automatic take-up device or on a coupling casing (9) connected to the frame (8).

21. Coupling according to claim 20, characterised in that the pivot axis (16) lies in the proximity of a rotational axis (17) about which the lifting movement of the spool (1), which is formed as a rotational movement, is performed.

22. Coupling according to any one of claims 1 to 21, characterised in that a locking detent (41, 42) for the purpose of locking a belt spool of a seat belt take-up roller to prevent the belt being drawn out can be activated for the locking engagement into the belt spool (1) by virtue of a component (47) which moves upon the seat belt being tightened.

23. Coupling according to claim 22 characterised in that an actuating part (44) which moves the locking detent (41, 42) into an engaging position with the belt spool (1) can be moved out of an inoperative position upon the seat belt being tightened.

24. Coupling according to claim 23 characterised in that the actuating part (44) is pretensioned in the actuating direction.

25. Coupling according to any one of claims 22 to 24 characterised in that a retaining part (46) is provided which retains the locking detent (41, 42) in a deactivated position with a pretensioning which is overcome by virtue of the actuating part (44).

26. Coupling according to any one of claims 22 to 25 characterised in that the locking detent (41, 42) comes into its final locking position by virtue of the reversal of a movement caused by the tensioning drive.

## Revendications

1. Dispositif de couplage destiné à transmettre le mouvement de retension qui s'exerce sur un câble de tension (3) à un dévidoir de bande de ceinture (1) d'un dispositif d'enroulement de ceinture de sécurité automatique, ayant un disque de couplage (2) qui est connecté au câble de tension (3) et un dispositif d'entraînement (4, 7) qui, dans le cas où un mouvement se produit dans le câble de tension (3), connecte le disque de couplage (2) d'une manière non rotative au dévidoir de bande de ceinture (1), dans lequel un mouvement de rotation du disque de couplage (2) provoqué par le mouvement dans le câble de tension est transmis au dévidoir (1), dans lequel le disque de couplage (2), en fonctionnement normal, est bloqué à l'aide d'un dispositif de blocage (10) afin d'empêcher la rotation sur le cadre (8) du dispositif d'enroulement automatique ou sur un boîtier de dispositif de couplage (9) connecté au cadre (8), le dispositif de blocage (10) peut être dégagé du fait de la force exercée par le mouvement du câble de tension, le dispositif d'entraînement (4, 7) comprend des éléments d'entraînement (4) qui, après dégagement du dispositif de blocage (10), se déplacent sous l'effet de la rotation du disque de couplage (2) d'une position normale située vers l'intérieur dans le sens radial à une position extérieure radiale en prise avec le dévidoir de bande de ceinture (1), et dans lequel, dans cette position en prise, le disque de couplage (2) et le dévidoir (1) sont mutuellement connectés d'une manière non rotative pour une rotation commune par rapport à un axe (18), et dans lequel, après dégagement du dispositif de blocage (10), un élément de blocage préliminaire (12) supporté sur le cadre (8) ou le boîtier de dispositif de couplage (9) se met en prise avec le dévidoir (1) et bloque le dévidoir (1) pendant le mouvement suivant du câble de tension afin d'empêcher la rotation.

2. Dispositif de couplage selon la revendication 1, caractérisé en ce que le mouvement de rotation dans la direction opposée à la direction dans laquelle le câble de tension est tiré, est bloqué.

3. Dispositif de couplage selon la revendication 1 ou 2, caractérisé en ce que l'élément de blocage préliminaire (12) prend la forme d'un levier supporté sur le cadre (8) ou le boîtier de dispositif de couplage (9).

4. Dispositif de couplage selon l'une quelconque des revendications 1 à 3, caractérisé en ce que le dispositif de blocage préliminaire (10) est fixé à l'élément de blocage préliminaire (12).

5. Dispositif de couplage selon l'une quelconque des revendications 1 à 4, caractérisé en ce que les éléments d'entraînement (4) sont montés de manière déplaçable sur le disque de couplage (2).

6. Dispositif de couplage selon l'une quelconque des revendications 1 à 5, caractérisé en ce que les éléments d'entraînement (4) comprennent des surfaces de commande (11), qui peuvent être guidées le long d'éléments de commande (6, 33) qui sont maintenus fixes par rapport au cadre (8) ou au boîtier de dispositif de couplage (9) pendant le mouvement des éléments d'entraînement (4) à la position en prise.

7. Dispositif de couplage selon l'une quelconque des revendications 1 à 6, caractérisé en ce que, en fonctionnement normal, le disque de couplage (2) est connecté de manière non rotative aux éléments de commande (6) au moyen d'un deuxième dispositif de blocage (13) et en ce que, après le dégagement du deuxième dispositif de blocage (13), le disque de couplage (2) peut tourner sous l'effet du mouvement du câble de tension par rapport aux éléments de commande (6) toujours maintenus de manière fixe sur le cadre (8) ou le boîtier de dispositif de couplage (9).

8. Dispositif de couplage selon l'une quelconque des revendications 1 à 7, caractérisé en ce que les éléments de commande (6) sont maintenus de manière fixe sur le cadre (8) ou le boîtier de dispositif de couplage (9) au moyen d'un troisième dispositif de blocage (14) jusqu'à ce que la connexion non rotative entre le disque de couplage (2) et le dévidoir (1) soit assurée à l'aide des éléments d'entraînement (4).

9. Dispositif de couplage selon la revendication 8, caractérisé en ce que le troisième dispositif de blocage (14) est ensuite dégagé si la connexion non rotative entre le dévidoir (1) et le disque de couplage (2) est produite.

10. Dispositif de couplage selon l'une quelconque des revendications 1 à 9, caractérisé en ce que les trois dispositifs de blocage (10, 13, 14) prennent la forme de broches qui sont coupées par cisaillement sous l'effet des forces exercées par le mouvement du câble de tension.

11. Dispositif de couplage< selon l'une quelconque des revendications 1 à 8, caractérisé en ce que les éléments de commande (33) sont prévus sur le boîtier de dispositif de couplage (9).

12. Dispositif de couplage selon l'une quelconque des revendications 1 à 11, caractérisé en ce que les éléments d'entraînement (4) prennent la forme de mâchoires qui peuvent être déplacées sur le disque de couplage (2) et peuvent être mises en prise non rotative avec la périphérie intérieure d'un anneau d'entraînement (2) prévu sur le dévidoir (1).

13. Dispositif de couplage selon la revendication 12, caractérisé en ce que les éléments d'entraînement (4) comprennent un agencement de dents (19) qui peut être mis en prise avec la périphérie intérieure de l'anneau d'entraînement (20).

14. Dispositif de couplage selon la revendication 12 ou 13, caractérisé en ce qu'une dent qui prend la forme d'une dent d'accrochage (21) dans l'agencement de dents (19) peut être déplacée en prise avec la périphérie intérieure de l'anneau d'entraînement (20) lors du déplacement de l'élément d'entraînement respectif (4).

15. Dispositif de couplage selon l'une quelconque des revendications 12 à 14, caractérisé en ce que l'anneau d'entraînement (20) comprend un agencement de dents (22) sur sa périphérie intérieure.

16. Dispositif de couplage selon l'une quelconque des revendications 1 à 15, caractérisé en ce que les éléments d'entraînement (4) se composent d'un matériau plus dur que la partie annulaire s'étendant intérieurement de l'anneau d'entraînement (20), avec laquelle les éléments d'entraînement (4) viennent en prise.

17. Dispositif de couplage selon la revendication 16, caractérisé en ce que la partie annulaire s'étendant intérieurement de l'anneau d'entraînement (20) est recouverte par une partie annulaire extérieure plus dure.

18. Dispositif de couplage selon l'une quelconque des revendications 1 à 17, caractérisé en ce que les éléments d'entraînement (4) sont maintenus en position non opérationnelle à l'aide d'une plaque de positionnement (34).

19. Dispositif de couplage selon l'une quelconque des revendications 1 à 18, caractérisé en ce que, sous l'effet du mouvement du câble de tension, un doigt d'encliquetage flexible (25) peut être mis en prise avec un agencement de dents (23) ou (24) qui est connecté de manière non rotative au dévidoir (1).

20. Dispositif de couplage selon l'une quelconque des revendications 1 à 19, caractérisé en ce que le disque de couplage (2) et le dispositif d'entraînement (47) peuvent être déplacés d'une seule pièce avec le dévidoir de bande de ceinture (1) sous l'effet d'un mouvement de levage dans une position de blocage, et en ce que, en fonctionnement normal, le dispositif de blocage (10) est monté sur le cadre (8) du dispositif d'enroulement automatique ou sur une boîtier de dispositif de couplage (9) connecté au cadre (8).

21. Dispositif de couplage selon la revendication 20, caractérisé en ce que l'axe de pivot (16) se situe à proximité d'un axe de rotation (17) par rapport auquel s'effectue le mouvement de levage du dévidoir (1), qui prend la forme d'un mouvement de rotation.

22. Dispositif de couplage selon l'une quelconque des revendications 1 à 21, caractérisé en ce qu'un cliquet de blocage (41, 42), destiné à bloquer un dévidoir de ceinture d'un tambour d'enroulement de ceinture de sécurité afin d'empêcher que la ceinture puisse être tirée, peut être activé pour se mettre en prise de blocage avec le dévidoir de ceinture (1) sous l'action d'un composant (47) qui se déplace lorsque la ceinture de sécurité est serrée.

23. Dispositif de couplage selon la revendication 22, caractérisé en ce qu'une partie d'actionnement (44) qui déplace le cliquet de blocage (41, 42) en position en prise avec le dévidoir de ceinture (1) peut être retirée d'une position non opérationnelle lorsque la ceinture de sécurité est serrée.

24. Dispositif de couplage selon la revendication 23, caractérisé en ce que la partie d'actionnement (44) est prétendue dans la direction d'actionnement.

25. Dispositif de couplage selon l'une quelconque des revendications 22 à 24, caractérisé en ce qu'une partie de retenue (46) est prévue, qui retient le cliquet de blocage (41, 42) dans une position désactivée avec une tension préalable qui est surmontée sous l'effet de la partie d'actionnement (44).

26. Dispositif de couplage selon l'une quelconque des revendications 22 à 25, caractérisé en ce que le cliquet de blocage (41, 42) vient à sa position de blocage final sous l'effet de l'inversion d'un mouvement provoqué par l'entraînement tensionneur.
